(19) Europäisches Patentamt

European Patent Office

Office européen des brevets

(11) Publication number: **0 535 691 A1**

# EUROPEAN PATENT APPLICATION

(21) Application number: **92116887.8**

(22) Date of filing: **02.10.92**

(51) Int. Cl.5: **C03C 17/25**, C03C 17/00

(30) Priority: **04.10.91 JP 257275/91**

(43) Date of publication of application:
**07.04.93 Bulletin 93/14**

(84) Designated Contracting States:
**DE FR GB**

(71) Applicant: **NIPPON SHEET GLASS CO., LTD.**
**5-11, 3-Chome Doshomachi**
**Chuo-ku Osaka(JP)**

(72) Inventor: **Hirayama, Naoto**
**c/o Nippon Sheet Glass Co, Ltd, 3-5-11,**
**Doshomachi**
**Chuo-ku, Osaka(JP)**
Inventor: **Nagayama, Hirotsugu**
**c/o Nippon Sheet Glass Co, Ltd, 3-5-11,**
**Doshomachi**
**Chuo-ku, Osaka(JP)**
Inventor: **Takigawa, Akio**
**c/o Nippon Sheet Glass Co, Ltd, 3-5-11,**
**Doshomachi**
**Chuo-ku, Osaka(JP)**
Inventor: **Kitaoka, Masaki**
**c/o Nippon Sheet Glass Co, Ltd, 3-5-11,**
**Doshomachi**
**Chuo-ku, Osaka(JP)**

(74) Representative: **Kraus, Walter, Dr. et al**
**Patentanwälte Kraus, Weisert & Partner**
**Thomas-Wimmer-Ring 15**
**W-8000 München 22 (DE)**

(54) **Water-repellent products and process for the production thereof.**

(57) A water-repellent product of inorganic or organic glass excellent in durability performances such as weatherability, water resistance, moisture resistance and abrasion resistance, which is formed of a) a substrate and b) a dense silicon oxide film containing a water-repellent agent containing at least one compound of an organic silicon compound and an organic fluorine compound, the dense silicon oxide film being formed on a surface of the substrate by bringing a silicon dioxide-supersaturated aqueous solution of hydrosilicofluoric acid containing the water-repellent agent into contact with the substrate.

EP 0 535 691 A1

Rank Xerox (UK) Business Services
(3.10/3.5x/3.0.1)

FIELD OF THE INVENTION

The present invention relates to a water-repellent product obtained by providing a transparent or non-transparent product such as windshield glass for a building, an automobile, a vehicle, an aircraft or a ship, an optical component lens, or an inorganic or organic glass product with a water-repellent coating excellent in durability performances such as weatherability, moisture resistance, water resistance and abrasion resistance.

PRIOR ART

When a glass product surface is provided with water repellency, a variety of effects can be expected. For example, (1) since waterdrops, which contain pollutants, hardly adhere to, or remain on, a glass surface, the contamination and yellowing of the glass surface can be prevented. (2) When this water-repellent glass is used as glass for a windshield or side window of an automobile, water on the glass is blown off due to a wind pressure while the automobile is running in the rain, and the driver's visual field is hence secured. Therefore, the safety in driving is improved. The above water-repellent glass is generally produced by a wet-coating method in which a water-repellent agent containing an organic silicon compound typified by a polydimethylsiloxane compound or a fluorine-containing silicon compound is wet-coated on a glass surface, or by a dry-coating method in which the above water-repellent agent is dry-coated by means of plasma or vapor deposition(Unexamined Patent Publication NO.63-191447: plasma method).

However, in the above methods of coating the water-repellent agent directly on a glass surface, it is difficult to maintain water repellency for a long time, since the adhesion strength between the water-repellent agent and the glass is low.

In order to overcome the above problem, Japanese Unexamined Patent Publication No. 2-311332 discloses a method in which a glass surface is coated with a metal oxide layer by a sol-gel method and then the surface of the metal oxide layer is silylated with a silyl compound. Further, "Proceeding 1D18 (p. 96) of Japan Ceramics Society, No. 66 General Meeting, 1991" reports a method in which an organic, fluorine-containing silicon compound is allowed to be contained in a sol-gel thin film of silicon oxide, whereby the sol-gel thin film per se shows high water repellency, and that water-repellent glass having excellent durability can be obtained.

Since, however, the method disclosed in Japanese Unexamined Patent Publication No. 2-311332 requires heat treatment at about 400°C or higher to form a metal oxide layer by a sol-gel method, this method cannot be applied to tempered glass having a compressive-strain layer on the surface. Further, in the above method in which an organic, fluorine-containing silicon compound is allowed to be contained in a sol-gel thin film of silicon oxide, the sol-gel thin film can be heated only at about 400°C or lower since the thin film contains an organic substance, that is, the thin film cannot be heat-treated at a high temperature at which the organic substance decomposes. As a result, the resultant sol-gel thin film is porous and insufficient in film strength, and has no sufficient abrasion resistance.

Further, using expensive metal alkoxide as a starting material, the above sol-gel method requires a high cost for forming a film. Moreover, due to the use of a dip coating method or a spin coating method, the above sol-gel method cannot be applied to a substrate having a complicated form.

The present inventors have made a diligent study to overcome the above problems. As a result, the present inventors have found that a water-repellent product of inorganic or organic glass can be improved in durability performances such as weatherability, water resistance, moisture resistance and abrasion resistance by coating the glass surface with a dense silicon oxide layer having water repellency.

SUMMARY OF THE INVENTION

It is an object of the present invention to provide a water-repellent, transparent or non-transparent product of inorganic or organic glass excellent in durability performances such as weatherability, water resistance, moisture resistance and abrasion resistance.

According to the present invention, there is provided a water-repellent product formed of a) a substrate and b) a dense silicon oxide film containing a water-repellent agent containing at least one compound of an organic silicon compound and an organic fluorine compound, the dense silicon oxide film being formed on a surface of the substrate by bringing a silicon dioxide-supersaturated aqueous solution of hydrosilicofluoric acid containing the water-repellent agent into contact with the substrate.

Further, according to the present invention, there is provided a process for producing a water-repellent product, which comprises immersing a substrate in a silicon dioxide-supersaturated aqueous solution of hydrosilicofluoric acid containing a water-repellent agent containing at least one compound of an organic silicon compound and an organic fluorine compound for a predetermined period of time, thereby to form a dense silicon oxide film containing the water-repellent agent on a surface of the substrate.

DETAILED DESCRIPTION OF THE INVENTION

The present invention will be detailed hereinafter. The substrate used in the present invention includes a transparent substrate and a non-transparent substrate. The transparent substrate includes general inorganic glass and general organic glass. The inorganic glass includes, for example, sodium-lime silicate glass, boric acid-containing Pyrex glass (trade mark of the glass supplied by Corning Co., Ltd.) and silicate, glass. Glass of these kinds may be so-called tempered glass which is provided with a compressive strain layer on the surface by thermal or chemical tempering. The organic glass includes transparent substrates formed of polycarbonate, polyolefin, a so-called acrylic material composed mainly of polymethyl methacrylate, polyvinyl chloride, and polyurethane. The substrate may have the form of any one of a plate, a curved plate, a box, a rod, and the like. The non-transparent substrate includes many kinds of metal, opaque glass and an opaque plastic.

In the present invention, the silicon oxide film containing a water-repellent agent is formed by bringing a treating solution containing a hydrosilicofluoric acid aqueous solution and the water-repellent agent, in which silicon dioxide is in a supersaturated state, into contact with the substrate. The content of the water-repellent agent in the hydrosilicofluoric acid aqueous solution containing silicon dioxide in a supersaturated state is generally 0.1 to 10 % by weight. When this content is less than 0.1 % by weight, the resultant silicon oxide film hardly contains the water-repellent agent. When this content exceeds 10 % by weight, a precipitate is formed in the treating solution, and the silicon oxide film is no longer formed. In this case, the hydrosilicofluoric acid aqueous solution containing supersaturated silicon dioxide can be obtained by adding boric acid, aqueous ammonia, metal halide or a metal having greater ionization tendency than hydrogen to a hydrosilicofluoric acid aqueous solution. For example, a silica-supersaturated aqueous solution of hydrosilicofluoric acid can be obtained by dissolving a silica gel powder in a hydrosilicofluoric acid aqueous solution having a hydrosilicofluoric acid concentration of 1.5 to 3.0 mol/l until the hydrosilicofluoric acid aqueous solution is saturated with the silica gel powder, and further adding boric acid up to a concentration of $200 \times 10^{-4}$ to $500 \times 10^{-4}$ mol/l. The silicon oxide-supersaturated, hydrosilicofluoric acid aqueous solution can be also obtained by adding silicon dioxide to a hydrosilicofluoric acid aqueous solution having a low temperature and then increasing the temperature of the resultant mixture (a so-called temperature difference method, see Japanese Unexamined Patent Publication No. 61-281047). Further, it can be also obtained by adding silicon dioxide to high-concentration hydrosilicofluoric acid and then diluting the resultant mixture (a so-called diluting method). The water-repellent agent may be added directly to hydrosilicofluoric acid, or after it is dissolved in water or a water-soluble organic solvent such as ethanol and the resultant mixture may be added to hydrosilicofluoric acid. Concerning when to add the water-repellent agent, it may be added to a hydrosilicofluoric acid solution before or after supersaturation of silicon dioxide. Among conditions for forming a thin film, the concentration of hydrosilicofluoric acid per liter of the aqueous solution is at least 1.0 mol, preferably 1.5 to 3.0 mol. When the substrate is brought into contact with, or immersed in, the treating solution, the temperature of the treating solution is from 15 to 60°C, preferably from 25 to 40°C. Although differing depending upon the temperature of the treating solution, the supersaturated state of silicon dioxide and the thickness of a film to be formed, the time for the above contacting or immersion is generally from 30 minutes to 24 hours. When a temperature difference is used, generally, silicon dioxide is saturated at a temperature of 10°C or lower, and the treating solution and the substrate are brought into contact with each other at a temperature of from 20 to 60°C for 30 minutes to 24 hours. When a diluting method is used, generally, a silicon dioxide-saturated aqueous solution having a hydrosilicofluoric acid concentration of about 4 mol/l is diluted to a hydrosilicofluoric acid concentration of 1.5 to 3.0 mol/l, the silicon dioxide-saturated aqueous solution is aged by stirring it for 30 minutes to 24 hours at 25 to 40°C, and then the substrate is brought into contact with it. When the substrate is brought into contact with the treating solution, the substrate is generally immersed in the treating solution.

The above treating solution is preferably a treating solution in which:
(a) the supersaturation degree is always maintained by (1) continuously adding and mixing an aqueous solution of an additive such as boric acid or aluminum chloride to/with it, (2) dissolving and mixing a metal such as aluminum in/with it, or (3) cooling it to saturate silicon dioxide and then elevating the temperature again, and,
(b) at least 3 % of the entire amount of the treating solution is filtered and recycled.

In the above contact time, (1) continuously adding and mixing an aqueous solution of boric acid or (2) dissolving and mixing a metal such as aluminum is preferred to improve the rate of forming a film. When an aqueous solution of boric acid is added, the amount of boric acid is preferably in the range of from $5 \times 10^{-4}$ to $1.0 \times 10^{-3}$ mol/hr per mole of hydrosilicofluoric acid in the treating solution. When aluminum is dissolved, the amount of aluminum is preferably in the range of from $1 \times 10^{-3}$ to $4 \times 10^{-3}$ mol/hr per mole of hydrosilicofluoric acid in the treating solution. Further, circulating at least 3 % of the entire amount of the treating solution is effective to form a uniform film continuously, and filtering the treating solution is preferred to obtain an uneven form-free film.

When the treating solution in an immersion vessel is brought into contact with the substrate, flowing the treating solution as a laminar flow on the substrate being immersed is effective to obtain a uniform homogeneous film. A silicon dioxide film obtained by this precipitation method contains adsorbed water and a silanol group. For removing these, it is preferred to heat-treat the film with high frequency.

By this contact treatment, a dense silicon oxide film containing a water-repellent agent containing at least one compound of an organic silicon compound and an organic fluorine compound is formed on the contact surface of the substrate. This film generally has a thickness of from 100 to 20,000 angstroms. A film having a thickness of less than 100 angstroms shows a contact angle similar to the contact angle of general soda-lime glass, or gives no effect. A film having a thickness of over 20,000 angstroms is liable to undergo cracking. The above water-repellent agent is contained in this dense silicon oxide film, and strongly bonded to silica of the silicon oxide film.

The organic silicon compound used as a water-repellent agent in the present invention includes polysiloxane, a chlorosilane compound, an alkoxysilane compound, a silazane compound and agents composed mainly of these compounds. And, preferred are those organic silicon compounds which are soluble in water and water-soluble organic solvent such as ethanol. A water-repellent layer formed of the above silicon compound containing fluorine has remarkably low surface tension and shows excellent water repellency. The silicon compound containing fluorine includes heptadecafluorodecyltrimethoxysilane and trifluoropropyltrimethoxysilane. These compounds may be used alone or in combination.

The polysiloxane is preferably a linear, branched or cyclic polysiloxane composed mainly of polydimethylsiloxane. The polysiloxane includes polysiloxanes having a hydroxyl group in the molecular structure such as silanol-terminated polydimethylsiloxane, silanol-terminated polydiphenylsiloxane, diphenylsilanol-terminated polydimethylphenylsiloxane, carbinol-terminated polydimethylsiloxane, hydroxypropyl-terminated polydimethylsiloxane and polydimethyl-hydroxyalkylene oxide methylsiloxane; polysiloxanes having an amino group in the molecular structure such as bis(aminopropyldimethyl)siloxane, aminopropyl-terminated polydimethylsiloxane, aminoalkyl group-containing, T-structured polydimethylsiloxane, dimethylamino-terminated polydimethylsiloxane and bis(aminopropyldimethyl)siloxane; polysiloxanes having a glycidoxyalkyl group in the molecular structure such as glycidoxypropyl-terminated polydimethylsiloxane, glycidoxypropyl-containing, T-structured polydimethylsiloxane, polyglycidoxypropylmethylsiloxane and a polyglycidoxypropylmethyl-dimethylsiloxane copolymer; polysiloxanes having a mercaptoalkyl group in the molecular structure such as mercaptopropyl-terminated polydimethylsiloxane, polymercaptopropylmethylsiloxane and mercaptopropyl-containing, T-structured polydimethylsiloxane; polysiloxanes having an alkoxy group in the molecular structure such as ethoxy-terminated polydimethylsiloxane, polydimethylsiloxane having trimethoxysilyl on one terminal and a polydimethyloctyloxymethylsiloxane copolymer; polysiloxanes having a carboxyalkyl group in the molecular structure such as carboxylpropyl-terminated polydimethylsiloxane, carboxylpropyl-containing, T-structured polydimethylsiloxane and carboxylpropyl-terminated, T-structured polydimethylsiloxane; polysiloxanes having a cyanoalkyl group in the molecular structure such as polybis(cyanopropyl)siloxane, polycyanopropylmethylsiloxane, a polycyanopropyl-dimethylsiloxane copolymer and a polycyanopropylmethyl-methyphenylsiloxane copolymer; hexamethyldisiloxane; and a polydimethylsiloxane-alkylene oxide copolymer, which are all soluble in water or water-soluble organic solvents such as ethanol, isopropyl alcohol and ethylene glycol. These polysiloxanes may be used alone or in combination.

The chlorosilane compound and the alkoxysilane compound have the following formula (1),

$$R^1{}_m\text{-Si-}R^2{}_n \qquad (1)$$

wherein $R^1$ is an alkyl group having 1 to 20 carbon atoms, a fluoroalkyl group or an alkyl or fluoroalkyl group having a structure of -O-, $CO_2$-, $SO_2N(C_3H_7)$ or -CONH- in the chain, $R^2$ is chlorine or an alkoxy group having 1 to 6 carbon atoms, m is 1, 2 or 3, and n is 1, 2 or 3, provided that m + n = 4. Typical examples of the chlorosilane compound and alkoxysilane compound include $C_{18}H_{37}SiCl_3$, $C_{18}H_{37}Si(OCH_3)_3$, $C_{12}H_{25}SiCl_3$, $C_{12}H_{25}Si(OCH_3)_3$, $CF_3(CF_2)_7CH_2CH_2Si(OCH_3)_3$, $CF_3(CF_2)_7CH_2CH_2SiCl_3$, $CF_3(CF_2)$-

$_7CH_2CH_2Si(CH_3)(OCH_3)_2$, $CF_3(CF_2)_7CH_2CH_2Si(CH_3)Cl_2$, $CF_3(CF_2)_5CH_2CH_2SiCl_3$, $CF_3(CF_2)_5CH_2CH_2Si$-$(OCH_3)_3$, $CF_3CH_2CH_2SiCl_3$, $CF_3CH_2CH_2Si(OCH_3)_3$, $C_8F_{17}SO_2N(C_3H_7)CH_2CH_2CH_2Si(OCH_3)$-$_3$,$C_7F_{15}CONHCH_2CH_2CH_2Si(OCH_3)_3$, $C_8F_{17}CO_2CH_2CH_2CH_2Si(OCH_3)_3$, $C_8F_{17}-O-CF(CF_3)CF_2-O-C_3H_6SiCl_3$ and $C_3F_7-O-(CF(CF_3)CF_2-O)_2-CF(CF_3)CONH(CH_2)_3Si(OCH_3)_3$. These compounds may be used as a mixture, or may be preliminarily converted to partial hydrolysis condensates with an acid or an alkali before use. Typical examples of the silazane compound include hexamethyldisilazane and $CF_3(CF_2)_7CH_2CH_2Si$-$(NH)_{3/2}$. These may be used as a mixture, or may be preliminarily converted to partial hydrolysis condensates with an acid or an alkali before use.

The organic fluorine compound used as a water-repellent agent in the present invention is selected from fluorine-containing surfactants. Examples of the fluorine-containing surfactants include anionic surfactants such as perfluoroalkyl sulfonate, perfluoroalkyl carbonate and perfluoroalkyl phosphate ester, cationic surfactants such as perfluoroalkyltrimethylammonium salt, and nonionic surfactants such as a perfluoroalkylethylene oxide adduct, a perfluoroalkyl group-hydrophilic group-containing oligomer, a perfluoroalkyl group-hydrophilic group-lipophilic group-containing oligomer and perfluoroalkyl betaine. Further, the organic fluorine compound is also selected from polymers which have a functional group such as a carboxyl, hydroxylalkyl, ester or isocyanate group in the terminal or molecular chain of a fluorine-containing polyether and show surface-active performance.

In the present invention, the surface of a product such as glass is coated with a dense silicon dioxide thin film containing the water-repellent agent, whereby there can be obtained a water-repellent product excellent in durability performances such as water resistance, moisture resistance, weatherability and abrasion resistance.

EXAMPLES

The present invention will be described further in detail by reference to Examples. However, the present invention shall not be limited to these Examples.

⟨Evaluation and testing methods⟩

A sample was measured for a contact angle of water by a sessile drop method with a CA-D supplied by Kyowa Kaimen Kagaku K.K. The measurement was conducted five times per sample, and the average value was taken as a value for the contact angle of water on the sample. Further, concerning the abrasion resistance, a water-repellent glass surface was abraded by means of a Taber abrader under the conditions where the abrading wheel was a CS-10F wheel, the load was 500 g and the number of rotation was 1,000, and the abraded glass surface was measured for a contact angle. That is, the influence of abrasion on water repellency was also studied.

Example 1

Water was added to a hydrosilicofluoric acid aqueous solution having a hydrosilicofluoric acid concentration of 4 mol/l, in which a silica gel powder had been dissolved up to saturation, i.e., up to an amount of about 20 g/l, to dilute the hydrosilicofluoric acid aqueous solution until the hydrosilicofluoric acid concentration became 2.5 mol/l. The resultant mixture was aged by stirring it at 30°C for 1 hour, thereby to prepare a hydrosilicofluoric acid aqueous solution in which silicon dioxide was supersaturated. Then, a solution of 50 % by weight of heptadecafluorodecyltrimethoxysilane (KBM7803, supplied by Shin-Etsu Chemical Co., Ltd.) as a water-repellent agent in ethanol was added to the above-prepared, silicon dioxide-saturated hydrosilicofluoric acid aqueous solution in such amount that the amount of KBM7803 per 300 cc of the hydrosilicofluoric acid aqueous solution was 3 cc, whereby a treating solution containing the water-repellent was prepared.

The above treating solution was stirred for 1 to 2 minutes, and a glass plate having a size of 5 × 5 cm and a thickness of 2 mm was immersed in the treating solution and allowed to stand in the treating solution at 30°C for 6 hours. Then, the glass plate was taken out and used as a sample for evaluation after its surface was washed with water. The resultant water-repellent film had a thickness shown in Table (unit: angstrom (Å)). It was found by means of a secondary ion mass spectrometer (SIMS) that the film contained heptadecafluorodecyltrimethoxysilane as a water-repellent agent. Table shows the initial water repellency (contact angle) and abrasion resistance (contact angle after abrasion test) of the sample. That is, the sample showed a contact angle of 112° and a contact angle, after abrasion test, of 97°, which shows that the sample was excellent in durability on water repellency.

Example 2

Example 1 was repeated except that the heptadecafluorodecyltrimethoxysilane was replaced with trifluoropropyltrimethoxysilane (LS-1090, supplied by Shin-Etsu Chemical Co., Ltd.) to obtain a sample. Table shows the performance of the sample.

Example 3

Example 1 was repeated except that the solution of 50 % by weight of heptadecafluorodecyltrimethoxysilane in ethanol was replaced with a solution of 10 % by weight of a perfluoro group-lipophilic group-hydrophilic group-containing nonionic surfactant (F-177, supplied by Dainippon Ink & Chemicals, Inc.) and that the amount thereof per 300 cc of the silicon dioxide-saturated hydrosilicofluoric acid aqueous solution was changed to 1 cc, to obtain a sample. Table shows the performance of the sample.

Example 4

Example 1 was repeated except that the heptadecafluorotrimethoxysilane was changed to bis-(aminopropyldimethyl)siloxane (B1710, supplied by Chisso Corp.), to obtain a sample. Table shows the performance of the sample.

Comparative Example 1

30 Grams of 0.1 N hydrochloric acid was added to 446 g of an ethanol/isopropanol (1:1) mixed solvent, and then a tetramethoxysilane/heptadecafluorodecyltrimethoxy-silane (KBM7803) (9.5:0.5) mixed solution was added. The resultant solution was measured for a nonvolatile content to show 5.2 % by weight. The solution was aged for 12 hours to prepare a solution for forming a water-repellent sol-gel thin film. The solution for forming a water-repellent sol-gel thin film was applied to sheet glass having a size of 5 × 5 cm and a thickness of 2 mm by a dipping method, and the resultant coating was dried at 120°C for 2 hours and baked at 350°C for 2 hours.

The above-obtained water-repellent glass was evaluated on durability, and Table shows the results. This sample showed a contact angle of 115° and a contact angle, after abrasion test, of 40°. It can be seen that the durability (contact angles 80° to 97°) of each of the samples obtained in Examples 1 to 4 on water repellency is excellent over that (40°) of the sample obtained in Comparative Example 1.

Table

|  | Film thickness (Å) | Contact angle (degree) | Contact angle after abrasion test (degree) |
|---|---|---|---|
| Example 1 | 1,000 | 112 | 97 |
| Example 2 | 1,000 | 100 | 94 |
| Example 3 | 500 | 102 | 80 |
| Example 4 | 1,000 | 101 | 80 |
| Comparative Example 1 | 1,000 | 115 | 40 |

## Claims

1. A water-repellent product formed of (a) a substrate, (b) a dense silicon oxide film containing a water-repellent agent containing at least one compound of an organic silicon compound and an organic fluorine compound, the dense silicon oxide film being formed on a suface of the substrate by bringing a silicon dioxide-supersaturated aqueous solution of hydrosilicofluoric acid containing the water-repellent agent into contact with the substrate.

2. A water-repellent product according to claim 1, the substrate includes a transparent substrate or a non-transparent substrate.

3. A water-repellent product according to claim 2, the transparent substrate includes inorganic glass or organic glass.

4. A water-repellent product according to claim 3, the inoganic glass includes sodium lime silicate glass, boric acid-containing silicate glass or silicate glass.

5. A water-repellent product according to claim 3, the organic glass includes polycarbonate, polyolefin, polymethacrylirate, polyacrylirate or polyvinyl chloride.

6. A water-repellent product according to claim 2, the non-transparent substrate includes metals, opaque glass or opaque plastic.

7. A water-repellent product according to claim 1, the content of the water-repellent agent in the hydrosilicofluoric acid aqueous solution containing silicon dioxide in a supersaturated state is 0.1 to 10 % by weight.

8. A water-repellent product according to claim 1, the organic silicon compound used as water-repellent agent includes polysiloxane, cholorosilane compound, an alkoxysilane compound or asilazane compound.

9. A water-repellent product according to claim 8, chlorosilane compound and alkoxysilane compound have the following formula

$R^1mSiR^2n$

wherein $R^1$ is an alkyl group having 1 to 20 carbon atoms, a fluoroalkyl group or an alkyl or fluoroalkyl group having astructure of $-O-$, $CO_2-$, $SO_2N(C_3H_7)$ or $CONH-$ in the chain, $R^2$ is chlorine or art alkoxyl group having 1 to 6 carbon atoms, m is 1, 2 or 3, and n is 1, 2 or 3, provided that $m + n = 4$.

10. A water-repellent product according to claim 1, the organic fluorine compound used as a water-repellent agent is selected from fluorine-containing surfactants.

11. A process for producing a water-repellent product, which comprises immersing a substrate in a silicon dioxide-supersaturated aqueous solution of hydrosilicofluoric acid containing a water-repellent agentcontaining at least one compound of an organic silicon compound and an organic fluorine compound for a predermined period of time, thereby to form a dense silicon oxide film containing the water-repellent agent on a surface of the substrate.

12. A process for producing a water-repellent product according to claim 11, hydrosilicofluoric acid aqueous solution containing supersaturated silicon dioxide can be obtained by adding boric acid, aqueous ammonia, metalhalide or a metal having greater ionization tendency than hydrogen to a hydrosilicofluoric acid containing supersaturated silicon dioxide.

13. A process for producing a water-repellent product according to claim 11, water-repellent agent may be added directly to hydrosilicofluoric acid or after it is dissolved in water or a water-soluble organic solvent.

14. A process for producing a water-repellent product according to claim 11, water-repellent agent may be added to a hydrosilicofluoric acid solution before or after supersatruration of silicon dioxide.

15. A process for producing a water-repellent product according to claim 11, concentration of hydrosilicofluoric acid per liter to the aqueous solution is at least 1.0 mol.

16. A process for producing a water-repellent product according to claim 11, the substrate is brought into contact with, or immersed in the aqueous solution of hydrosilicofluoric acid at 15 to 60 ° C.

7

**17.** A process for producing a water-repellent product according to claim 11, the aqueous solution of hydrosilicofluoric acid is flowed as a laminar flow on the substrate being immersed.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-4 468 420 (NIPPON SHEET GLASS CO. LTD.)<br><br>* example 1 *<br>--- | 1-4,8,9, 11-14, 16,17 | C03C17/25<br>C03C17/00 |
| Y | CHEMICAL ABSTRACTS, vol. 100, no. 10, March 1984, Columbus, Ohio, US; abstract no. 72917k, page 285 ;<br>* abstract *<br>& JP-A-58 172 243 (ASAHI GLASS CO. LTD.)<br>--- | 1-4,8,9, 11-14, 16,17 | |
| A | US-A-2 505 629 (S.M. THOMSEN ET AL.)<br>* claim 9 *<br>--- | 1,12 | |
| A | CHEMICAL ABSTRACTS, vol. 98, no. 4, January 1983, Columbus, Ohio, US; abstract no. 21036e, F. DEYHIMI ET AL. 'RAPID SILYLATION OF A GLASS SURFACE: CHOICE OF REAGENT AND EFFECT OF EXPERIMENTAL PARAMETERS ON HYDROPHOBICITY' page 256 ;<br>* abstract *<br>& HELV. CHIM. ACTA vol. 65, no. 6, 1982, pages 1752 - 1759<br>--- | 8,9 | **TECHNICAL FIELDS SEARCHED (Int. Cl.5)**<br><br>C03C<br>C23C |
| A | CHEMICAL ABSTRACTS, vol. 103, no. 24, 1912, Columbus, Ohio, US; abstract no. 199876p, H. YANAZAWA 'SURFACE TREATMENT BY FLUORO-COMPOUNDS' page 1985 ;<br>* abstract *<br>& ZAIRYO GIJUTSU vol. 2, no. 11, 1984, pages 621 - 624<br><br>----- | 8,9 | |

The present search report has been drawn up for all claims

| Place of search | Date of completion of the search | Examiner |
|---|---|---|
| THE HAGUE | 21 DECEMBER 1992 | REEDIJK A.M.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                   

& : member of the same patent family, corresponding document

EPO FORM 1503 03.82 (P0401)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| | | | |

TECHNICAL FIELDS
SEARCHED (Int. Cl.5 )

The present search report has been drawn up for all claims

| Place of search | Date of completion of the search | Examiner |
|---|---|---|
| THE HAGUE | 21 DECEMBER 1992 | REEDIJK A.M.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)